# EUROPEAN PATENT SPECIFICATION

(11) **EP 2 287 090 B1**
(45) Date of publication and mention of the grant of the patent: **29.05.2013**
(21) Application number: 10160385.0
(22) Date of filing: 20.04.2010
(51) Int. Cl.: B65D 85/804

(54) **Capsule for the preparation of a coffee extract having a structure facilitating perforation for injection of water**
Kapsel zur Herstellung eines Kaffeeextrakts mit einer Struktur zur Erleichterung der Perforation zur Einspritzung von Wasser
Capsule pour la préparation d'extrait de café dotée d'une structure facilitant la perforation pour l'injection d'eau

(30) Priority: 19.08.2009 EP 09168130; 30.10.2009 EP 09174573; 27.01.2010 EP 10151781
(43) Date of publication of application: 23.02.2011
(62) Divisional of application: 10168591.5
(73) Proprietor: Nestec S.A., 1800 Vevey (CH)
(72) Inventor: Yoakim, Alfred, 1806 St-Légier-La Chiésaz (CH); Kollep, Alexandre, 1095 Lutry (CH); Borne, Patrice, 74500 Publier (FR)
(74) Representative: Rupp, Christian

(56) References cited:
- EP-A1- 0 521 510
- EP-A1- 0 806 373
- EP-A1- 1 654 966
- EP-A2- 1 813 333
- WO-A1-2009/050540
- WO-A1-2009/133134
- WO-A2-2007/085921
- WO-A2-2008/087099
- WO-A2-2010/038213
- WO-A2-2010/041179
- FR-A1- 2 617 389
- US-A- 4 136 202

## Description

The present invention relates to a capsule for the preparation of a coffee extract from coffee contained in the capsule by hot water injected under pressure in the capsule using a water injection device having perforating blades. The invention also relates to a system of capsule comprising the capsule of the invention associated to a water injection device in a beverage production device.

The background of the present invention is the field of capsules which contain beverage or other comestibles ingredients. By means of an interaction of these ingredients with a liquid, a beverage such as coffee, tea or other comestibles, such as for example soup, can be produced. The interaction can be based on the principle dissolution, in presence of a liquid diluent such as water.

The capsule of the invention is more particularly adapted to contain ground coffee in order to produce a coffee beverage by injecting hot water under pressure into the capsule and obtaining a coffee beverage from the capsule.

Systems and methods for obtaining fluid comestibles from substances containing capsules are for example known from EP 512 470 A. Therefore, the capsules are closed by walls, preferably liquid impermeable walls including an inlet wall which is pierced only during use, for injection of water, for example, when the capsule is introduced in the device.

An improvement consists in providing an injection device comprising a series of blades separated from the central injection conduit as described in EP1299022B1. A better flow distribution is obtained as compared to a central perforation obtained by a single injection needle. Such device works properly with a capsule's body made of thin aluminium because aluminium tends to perforate easily due to its mechanical properties. Furthermore, the perforations can be well dimensionally and geometrically defined and therefore they provide a good flow distribution across the bed of ingredient in the capsule. However, the known embodiments suffer the disadvantage that certain capsules made of more elastic materials such as polymers can be difficult to pierce in a repeated manner and the resulting perforations are not so well dimensionally and geometrically defined. Especially with capsules comprising plastic walls or biodegradable polymers, the material can be relatively difficult to pierce and the piercing members of the device may become blunt relatively rapidly. Therefore, new capsules can no longer be pierced correctly, e.g., they are pierced partially or insufficiently thereby providing a bad flow distribution of liquid in the capsule which affects the quality of extraction. The beverage preparation device may also have to be returned to a service or maintenance station for repairing or replacing the piercing members which have been damaged.

The present invention aims at solving this problem by providing a capsule which is more easy perforable for ensuring a good quality of extraction and which does not damage the injection device of the existing art.

W02010/041179 relates to a capsule for preparing a beverage with an upper wall comprising on its internal surface a weakening zone adapted to be displaced when an external element exerts a force thereon.

W02007/085921 relates to a filtering package for infusion products comprising a cylindrical container with an aperture bottom covered by a filtering diaphragm applied onto the internal flange. The solution allows for simplicity of use also in machines such as standard espresso machines.

W02009/133134 relates to a sealed capsule for containing beverage ingredients and having an inlet-side membrane. The capsule further comprises a recessed section which is an integral part of the body and is provided with a plurality of openings; said section being sealed against the exterior of the capsule in an air-tight manner by means of an additional cover member connected to the body as a separate piece.

W02009/050540 relates to a capsule for preparing a beverage comprising a hollow member for containing a dose, for example, ground coffee; said member comprising a sidewall, an upper face and a lower face including an extraction membrane, said cartridge further comprising several reliefs provided on said side wall and/or said upper wall, each protrusion including at least one perforation area. The reliefs form a relatively small surface. The thickness of the wall at the level of the reliefs is substantially identical to the thickness of the wall of the capsule. It results that the force of the perforating element by surface unit is particularly elevated at the level of the reliefs.

WO 2010/038213 relates to a capsule for preparing a drink, such as coffee, the capsule comprising a hollow element designed to contain a serving, such as ground coffee, said hollow element comprising a side wall, a top face, and a lower face having a release membrane; said capsule also comprises at least one self-piercing relief on said side wall and/or said top face.

W02008/087099 relates to a capsule, for example for brewing coffee, the capsule consists of a preferably rotationally symmetrical capsule body comprising a side wall and a base that is formed as one piece with said wall. The capsule is sealed by a lid, creating an impervious chamber for holding the substance contained in the capsule. The base and lid can be pierced by suitable means to allow a liquid to be conducted through the capsule. The base is provided with an annular channel, the inner wall section of which forms a reinforcement zone. The base of the channel forms a piercing zone, which can be pierced more effectively as a result of said reinforcement zone, without the deformation of the entire capsule base.

EP0521510 relates to a packaging in the form of a cartridge containing a substance for making a drink. The cartridge has a body of frustoconical, inverted frustoconical or hemispherical shape and a membrane acting as a cover. The membrane or the bottom of the body of the cartridge comprises a plurality of perforations constituting zones of reduced thickness enabling the cartridge to be opened during extraction by a fluid under pressure while directing the flow of fluid through the bed of substance.

US 4136202 relates to a capsule for beverage preparation comprising a body with a central cylindrical recess which may comprise a weakened portion.

The invention relates to a capsule for the preparation of a coffee extract from coffee contained in the capsule and hot water injected under pressure in the capsule by a water injection device, said capsule comprising: a frusto-conical body comprising a rim, a sidewall and an inlet wall; the inlet wall comprising a flat or convex portion, a lower delivery wall sealed to the rim of the body, a predosed amount of coffee in the capsule, wherein the flat or convex portion has a structure in recess, wherein the structure in recess is arranged for facilitating penetration of blades belonging to the injection device through said structure and extends on a substantially circular path of predetermined radius R1 equal to the radius R2 of the circular path along which the blades of the injection device extend, wherein the structure forms a locally reduced thickness of the inlet wall compared to the thickness of inlet wall outside said structure and, wherein the rim of the capsule comprises sealing means forming at least one integral protrusion or lip extending from the rim or an added seal element such as rubber, soft plastic, foam or fibres, wherein the body is self-standing, integrally moulded piece forming at least the inlet wall, sidewall and the rim; wherein the structure forms one continuous recessed annular portion of radius R1 in said portion of the inlet wall, and wherein in the recessed portion a plurality of injection holes is provided.

In general, the structure preferably forms a locally reduced thickness of the inlet wall compared to the thickness of inlet wall outside said structure. As a result, the perforation resistance decreases in the structure compared to the other part of the body of the capsule which so facilitates piercing by the blades but also provide better geometrically and dimensionally defined perforations.

In a mode, the structure comprises an annular recessed portion of radius R1 comprising a plurality of injection holes and a gastight membrane sealed onto the inner wall to sealingly cover the injection holes.

In another mode, the body is preferably formed of a self-standing integrally moulded cup-shaped piece forming at least the inlet wall and side wall and preferably the rim as well.

The frusto-conical body can be made of polymer material.

Preferably, the frusto-conical body comprises polypropylene or polyethylene.

In an alternative, the frusto-conical body can also comprise a biodegradable material. For instance, the frusto-conical body comprises cellulose, starch-based material or polylactic acid (PLA).

In an alternative, the structure of reduced thickness is formed of a material different from the material of the body outside of the said structure. More specifically, the structure can be formed of a plastic or aluminium foil which is embedded or sealed or connected otherwise with the side wall of the body.

The delivery wall can be a membrane that perforates under the effect of the pressure building in the capsule against a capsule holder comprising perforating elements such as described in detail in EP0512470. Preferably, the delivery wall is a thin aluminium, thin polymer or combination thereof. In a preferred example, the delivery wall is an aluminium foil of about 210-100 microns.

The delivery wall can also be a permeable wall such as a plastic filter membrane, a paper filter or a filter made of other biodegradable material.

The delivery wall is sealingly connected to the bottom surface of the rim of the body such as heat or ultrasonic welding.

The rim can comprise a sealing means. The sealing means forms at least one integral protrusion or lip extending from the rim or an added seal element such as rubber, soft plastic, foam or fibres.

The sealing means can be formed by a thickness of material that softens when it is compressed under the compressive forces of the device and/or softens by the liquid at the temperature of injection in the capsule.

The sealing means can be integral with the body of the capsule, i.e., made of the same material. For instance, it can be a biodegradable material comprising starch and optionally constituents chosen amongst: at least one biodegradable resin, fibres, proteins, lipids and combination thereof.

Regarding the critical dimensions and geometry of the capsule, the radius R1 of the structure is preferably comprised between 4 and 12 mm, most preferably between 6 and 9 mm. The inlet wall has preferably a diameter comprised between 22 and 25 mm. The delivery wall of the capsule has preferably a diameter between 30 and 40 mm. The body of the capsule has preferably a height comprised between 27 and 30 mm. The rim of the capsule has preferably a width comprised between 3 and 5 mm.

For improving perforation of the capsule, the inlet wall has a convex portion forming an angle of between 5 and 40 degrees relative to the plane passing by the flange-like rim of the body.

The blades of a beverage production device to which the capsule may be associated are placed along a circular path of radius R2 substantially equal to the radius R1 along which the structure in relief or recess extends. Preferably, the water injection device of the beverage production device comprises three blades evenly distributed along said circular path of radius R2 for ensuring an even distribution of water in the capsule through the bed of ingredient, e.g., ground coffee.
Figure 1 shows a cross section view of an example of a capsule.
Figure 2 shows a top view of the capsule of figure 1;
Figure 3 shows a top view of the capsule of figure 1 according to another example;
Figure 4 shows a cross section view of a capsule of figure 1 when perforated by the injection device of the beverage preparation device;
Figure 5 is a cross section view of a capsule according to a preferred embodiment;
Figure 6 is a top view of the capsule of figure 5;
Figure 7 is a perspective view of an example of a capsule.
Figure 8 is a top view of the capsule of figure 7;
Figure 9 is a bottom view of the capsule of figures 7 and 8;
Figure 10 is a bottom perspective view of a water injection device;
Figure 11 is a top view of another example of a capsule.
Figure 12 is a cross sectional view of a further example of a capsule.

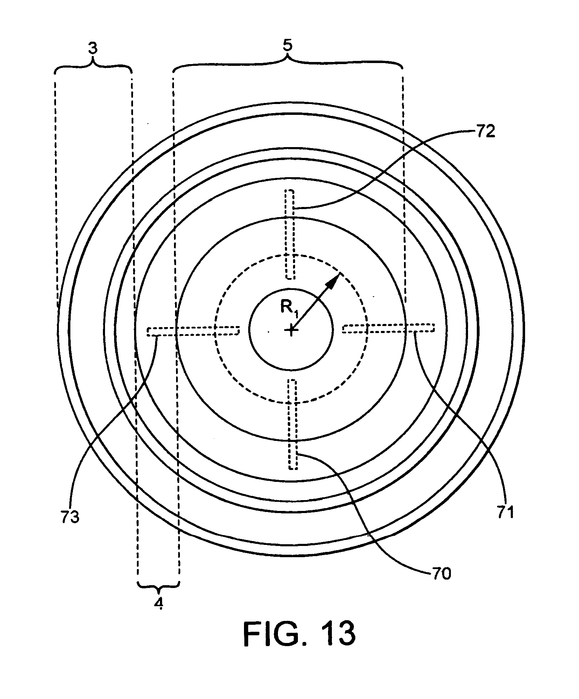

Figure 13 is a top view of the capsule of Figure 12.

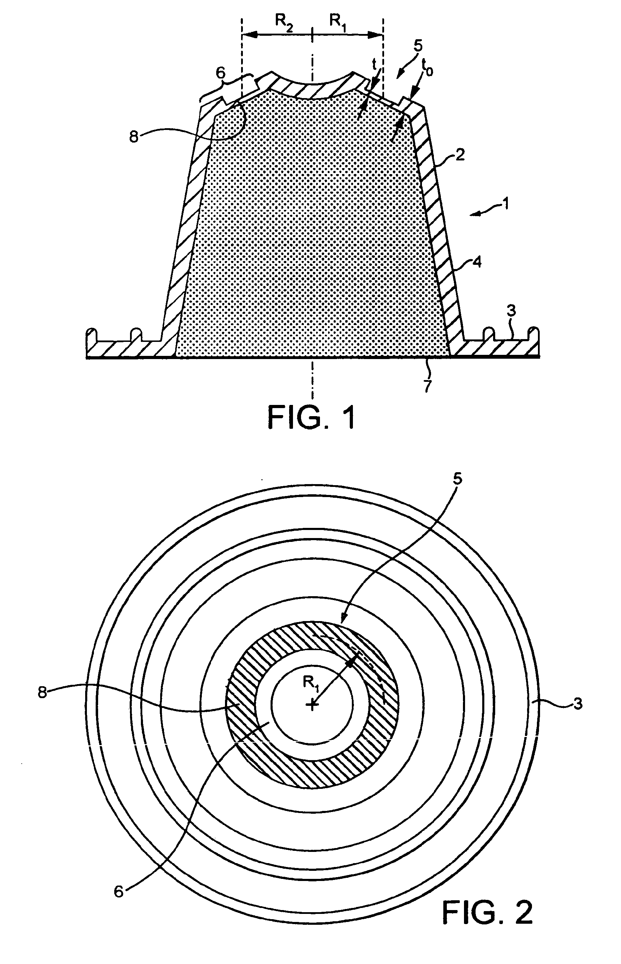

A first example of a capsule is illustrated in figures 1 and 2.

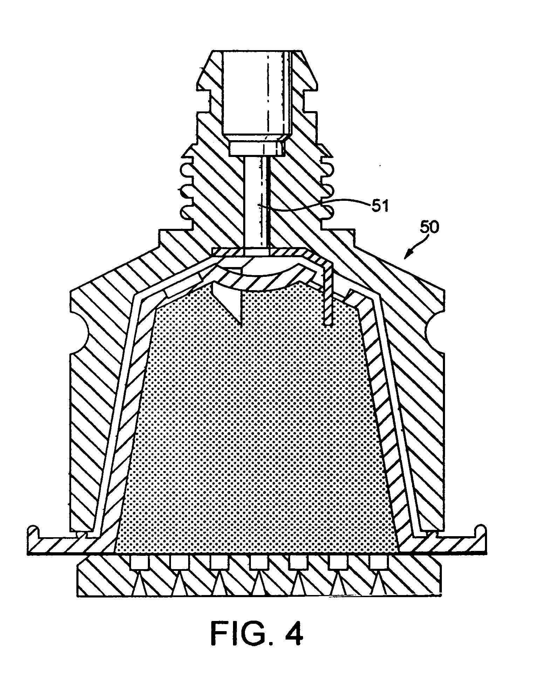

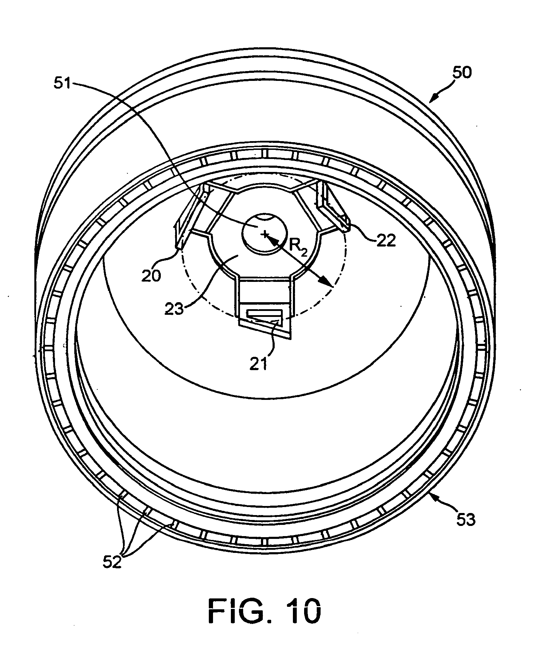

The capsule 1 is for the preparation of a coffee extract from coffee contained in the capsule and hot water injected under pressure in the capsule by a water injection device 50 shown in figures 10 and 4.

The device of figure 10 is formed of a capsule cage comprising a series of blades 20, 21, 22 placed along a circular pattern of radius R2. In the centre or cage is provided a liquid injection conduit 51 for supplying water under pressure in the cage.

The capsule comprises a frusto-conical body 2 comprising a rim 3, a sidewall 4 and an inlet wall 5.

The inlet wall comprises a flat or convex portion 6.

The capsule further comprises a lower delivery wall 7 sealed to the rim 3 of the body.

The capsule comprises a predosed amount of, e.g., roast and ground, coffee in the capsule.

The flat convex portion 6 has a annular structure 8 in recess arranged for facilitating penetration of the blades 20, 21, 22 of the injection device 50.

The structure 8 extends on a substantially circular path of predetermined radius R1 substantially equal to the radius R2 of the circular path along which the blades 20, 21, 22 of the injection device extend.

In the example of figures 1 and 2, the structure forms a continuous recessed circular or annular portion 8 of radius R1. As a result, regardless of the capsule rotational positioning relative to the injection device 50, the blades always enter in the recessed circular or annular portion 8.

Furthermore, the structure 8 forms a locally reduced thickness t of the inlet wall 5 compared to the thickness to of the inlet wall or side wall of the body outside said structure. Although the structure 8 facilitates perforation, the capsule remains closed and coffee powder cannot escape out of the capsule during storage.

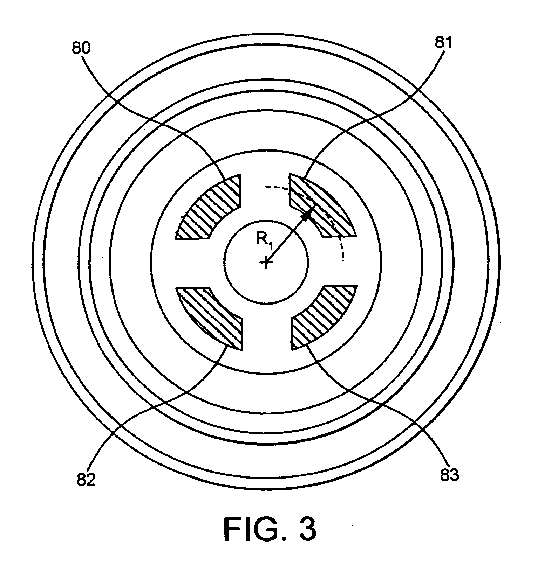

Figure 3 illustrates an example of the capsule of figure 1 in which the structure forms a plurality of recessed portions 80, 81, 82, 83 placed along a circular path of radius R1. The portions can be arcuated or rectilinear. Therefore, instead of a continuous annular structure, the structure is discontinuous and forms several discrete portions, extending along radius R1 and separated by non-recessed portions of the inlet wall. The recessed portions are of reduced thickness t compared to the thickness to outside of the structure. The reduction of thickness can be of between 30 to 90% of the thickness of the wall outside the structure. The number and length of the portions 80-83 are provided to ensure that the blades 20, 21, 22 will meet the structure irrespective of the position of the capsule in the injection device. The reduction of thickness can be obtained by different means such as directly by thermoforming, blow moulding or injection moulding of the body or by moulding of the body and then laser or mechanical scoring or stamping the structure itself. The capsule remains also closed by the structure of reduced thickness thereby ensuring preservation of coffee against humidity.

Of course, instead of recessed portions, the structure could be replaced by a continuous circular embossing of radius R1 or a plurality of discontinuous embossed portions extending along a circular path of radius R1.

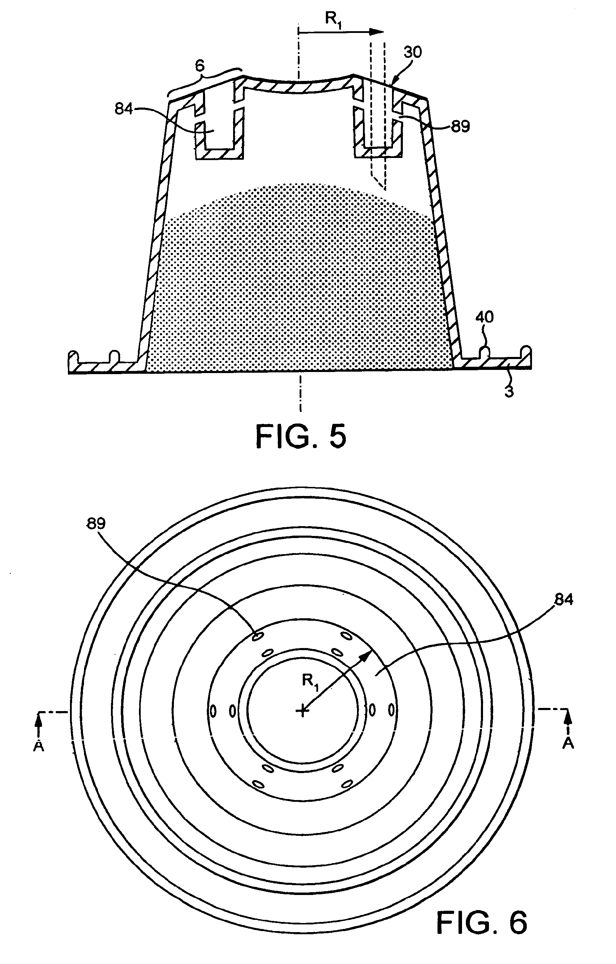

Figures 5 and 6 illustrate a capsule according to a preferred embodiment with a structure comprising an annular recessed portion 84 extending along radius R1. The portion 84 should be narrow enough to guide the blades during introduction of the capsule in the cage of the injection device 50. In the recessed portion 8, a plurality of injection holes 89 is provided to ensure the distribution of the water flow in the capsule. A gastight membrane 30 can be optionally provided which is sealed onto the inner wall to sealingly cover the portion 84 including the injection holes 89. It should be noted that the bottom of the portion 84, at least, is formed of a thickness lower than the thickness of the inlet wall outside the portion to facilitate entry of the blades in the capsule. If not, the portion 84 should be deep enough to ensure that the blades are fully lodged in the recess formed by the portion or the portion can stretch inwards under the introduction force imparted to the blades.

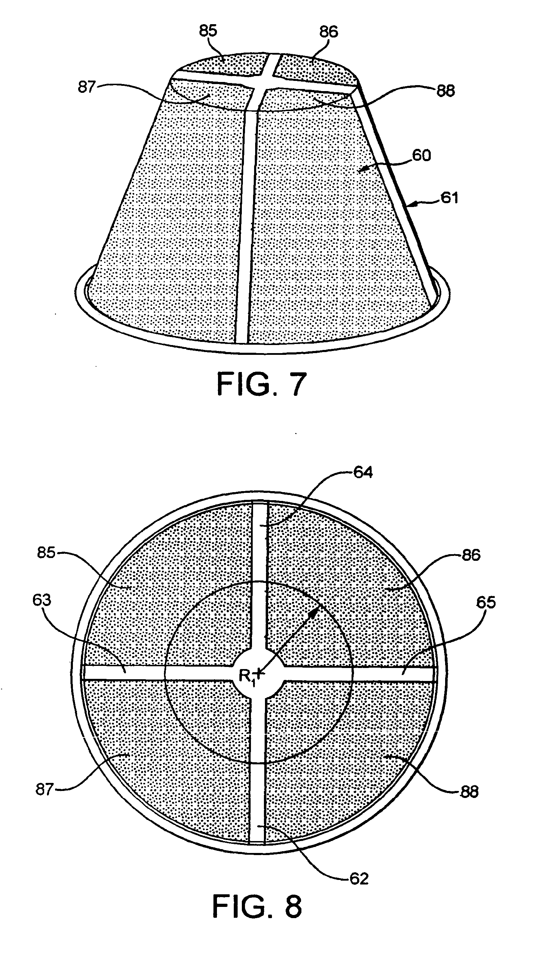

Figures 7 to 9 illustrate an example of a capsule in which the structure is formed by a porous or non porous thin membrane or a filter 60 supported onto a rigid skeleton 61. The skeleton ensures the support of the membrane or filter in particular after extraction to avoid the capsule to collapse or deforms when wetted. The membrane or filter can be a paper filter or a polymer porous membrane, non woven or woven, for example. The membrane may also be a membrane that is not porous to the injected water such as thin polyethylene foil. It can be supported by the skeleton which is made of a more rigid and thicker paper or cardboard or a polymer. The skeleton forms several legs 62, 63, 64, 65 separating the porous or non porous membrane or filter portions 85, 86, 87, 88 forming the structure facilitating penetration of the blades therethrough. It should be noted that penetration of the blades is not critical when the membrane is porous or when it is a filter. In such case, the material can eventually be elastic enough to stretch without being traversed by the blades. The filter can extend along the sidewall of the body. In an alternative, the filter is limited on the inner wall of the capsule and the skeleton forms the entire side wall.

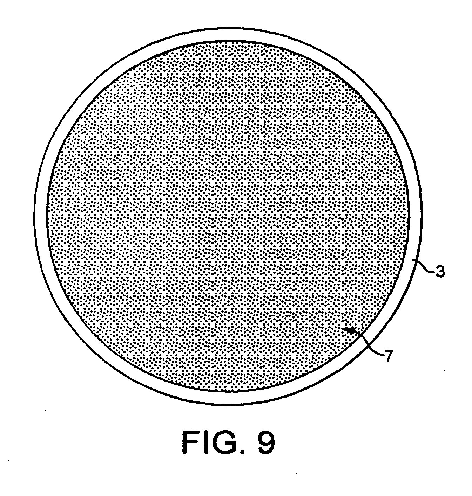

As illustrated in figure 9, the membrane or filter can extend and forms the lower delivery wall 7 of the capsule. The skeleton can further form the rim 3 of the capsule.

In all the examples, the frusto-conical body can be made of polymer material or cellulose-based material (paper, cardboard) or natural fibres.

In a preferred mode, the frusto-conical body comprises polypropylene or polyethylene.

In another mode, the frusto-conical body comprises a biodegradable material.

The frusto-conical body comprises cellulose, starch-based material or polylactic acid (PLA).

Preferably, the rim of the capsule comprises a sealing means 40 for filling radial grooves 52 formed at the end pressing surface 53 of the injection device (figure 10). More preferably, the sealing means 40 forms at least one integral protrusion or lip extending from the rim or be an added seal element such as rubber, soft plastic, foam or fibres (e.g. paper, cardboard or synthetic or natural fibres).

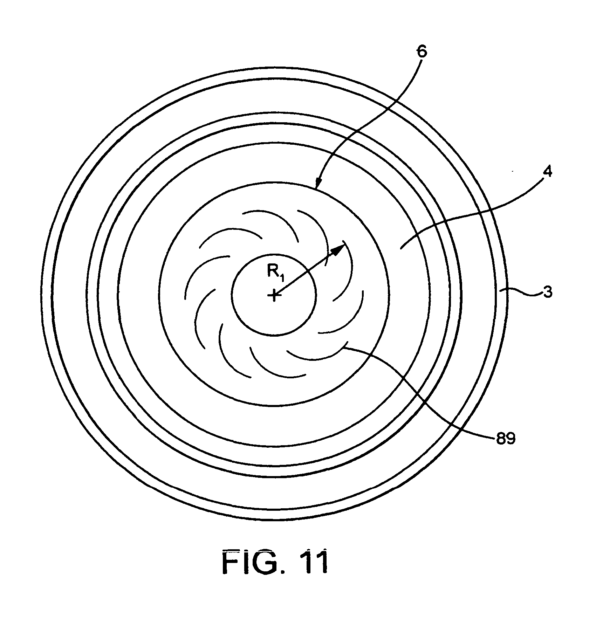

Figure 11 shows another examples of a capsule in which the structure at the inlet wall is formed of a series of weakened lines extending transversally to a circular path of radius R1.

The lines can be discrete zones of reduced thickness such as obtained by laser or mechanical scoring.

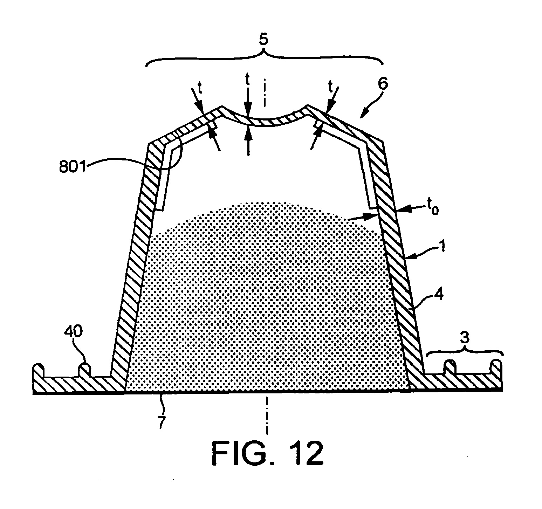

Figure 12 shows another example of a capsule in which the inlet wall 5 and side wall 4 are formed of a self-standing, integrally moulded, cup-shaped body which comprises a structure 801 of reduced thickness "t" extending from the axial centre of the capsule to the end of the periphery of the inlet wall 5. The reduction of thickness "t" is compared to the larger thickness of the sidewall "t₀". Preferably, the reduction of thickness is of at least 20%, preferably at least 50% of thickness "to". The thickness of the inlet wall "t" is preferably lower than 1.0 mm, most preferably comprised between 0.2 and 0.8 mm. As a result the blades of the injection device are capable of perforating the inlet wall in the region of the inlet wall corresponding to radius R₂ in a facilitated manner. At the same time, the capsule is sufficiently rigidified by the side wall of increased thickness (to). The blades can therefore perforate the inlet at the circular line of radius (R1) corresponding to the line of radius (R2) of extension of the blade in the device without the capsule collapsing in the axial direction of the capsule. When more rigidity is necessary depending on the specific rigidity of the polymer and/or biodegradable material, reinforcing members 70, 71, 72, 73 are provided in or on the walls 4, 5. The reinforcing members may have different lengths, e.g., with shorter ones 70, 72, to reduce the coverage along the radius R1.

The reinforcing members are preferably made integral with the body by moulding (e.g., injection, thermoforming, blow-moulding, stamping, etc.) on the outer or inner surface of the body. However, reinforcing members can also be provided as elements embedded in the constituting material of the body itself such as metal or hard plastic fibres and/or wires. The reinforcing members can extend only at the inlet wall 5 but preferably they extend also at the side wall 4 for ensuring an improved axial resistance to axial deformation during perforation. In order to prevent accidental bending of the blades and/or too high resistance forces acting against the closure of the device on the capsule, the reinforcing members are substantially free in the circular line of radius R1.

## Claims

1. Capsule (1) for the preparation of a coffee extract from coffee contained in the capsule and hot water injected under pressure in the capsule by a water injection device, said capsule comprising:
a frusto-conical body (2) comprising a rim (3), a sidewall (4) and an inlet wall (5); the inlet wall comprising a flat or convex portion (6),
a lower delivery wall (7) sealed to the rim (3) of the body,
a predosed amount of coffee in the capsule,
wherein the rim of the capsule comprises sealing means (40) forming at least one integral protrusion or lip extending from the rim or an added seal element such as rubber, soft plastic, foam or fibres,
wherein the body is a self-standing, integrally moulded piece forming at least the inlet wall, sidewall and the rim;
**characterized in that** the flat or convex portion (6) has a structure (8) in recess,
wherein the structure in recess is arranged for facilitating penetration of blades belonging to the injection device through said structure and extends on a substantially circular path of predetermined radius R1 equal to the radius R2 of the circular path along which the blades (20, 21, 22) of the injection device extend,
wherein the structure (8) forms a locally reduced thickness of the inlet wall (5) compared to the thickness of inlet wall outside said structure and,
wherein the structure forms one continuous recessed annular portion (8) of radius R1 in said portion (6) of the inlet wall, and wherein in the recessed portion a plurality of injection holes is provided.

2. Capsule according to claim 1, wherein the local reduction of thickness is obtained by laser or mechanical scoring.

3. Capsule according to any of the preceding claims, wherein the frusto-conical body is made of polymer material.

4. Capsule according to claim 3, wherein the frusto-conical body comprises polypropylene or polyethylene.

5. Capsule according to any of the preceding claims 1 to 4, wherein the frusto-conical body comprises a biodegradable material.

6. Capsule according to any of the preceding claims, wherein the sealing means softens when it is compressed under compressive forces of the device.

7. Capsule according to any one of the preceding claims, wherein the sealing means softens by the liquid at the temperature of injection of the capsule.

8. Capsule system comprising a capsule according to any one of claims 1 to 7 associated to a water injection device in a beverage production device.

## Patentansprüche

1. Kapsel (1) zur Zubereitung eines Kaffeeextraktes aus in der Kapsel enthaltenem Kaffee und von einer Wassereinspritzvorrichtung unter Druck in die Kapsel eingespritztem heißem Wasser, wobei die Kapsel Folgendes umfasst:
einen kegelstumpfförmigen Körper (2) mit einem Rand (3), einer Seitenwand (4) und einer Einlasswand (5); wobei die Einlasswand einen ebenen oder konvexen Abschnitt (6) aufweist,
eine untere Abgabewand (7), die an dem Rand (3) des Körpers versiegelt ist,
eine vordosierte Menge an Kaffee in der Kapsel,
wobei der Rand der Kapsel Dichteinrichtungen (40) umfasst, die mindestens einen integralen Vorsprung oder eine integrale Lippe bilden, der/die sich von dem Rand oder einem hinzugefügten Dichtelement wie Gummi, weichem Kunststoff, Schaum oder Fasern erstreckt,
wobei der Körper aus einem selbststehenden, einstückig geformten Teil besteht, das zumindest die Einlasswand, die Seitenwand und den Rand bildet;
**dadurch gekennzeichnet, dass** der ebene oder konvexe Abschnitt (6) eine vertiefte Struktur (8) aufweist,
wobei die vertiefte Struktur zur Vereinfachung des Eindringens von zu der Einspritzvorrichtung gehörenden Klingen durch diese Struktur angeordnet ist und sich auf einer im Wesentlichen kreisförmigen Bahn mit vorgegebenem Radius R1 erstreckt, der gleich dem Radius R2 der kreisförmigen Bahn ist, über die sich die Klingen (20, 21, 22) der Einspritzvorrichtung erstrecken,
wobei die Struktur (8) eine lokal verringerte Dicke der Einlasswand (5) gegenüber der Dicke der Einlasswand außerhalb dieser Struktur ausbildet, und
wobei die Struktur einen durchgehenden vertieften Ringabschnitt (8) mit dem Radius R1 in dem Abschnitt (6) der Einlasswand bildet, und wobei in dem vertieften Abschnitt eine Vielzahl von Einspritzlöchern vorgesehen ist.

2. Kapsel gemäß Anspruch 1, wobei die lokale Verringerung der Dicke durch Laser- oder mechanisches Einkerben erzielt wird.

3. Kapsel gemäß einem der vorhergehenden Ansprüche, wobei der kegelstumpfförmige Körper aus Polymermaterial besteht.

4. Kapsel gemäß Anspruch 3, wobei der kegelstumpfförmige Körper Polypropylen oder Polyethylen enthält.

5. Kapsel gemäß einem der vorhergehenden Ansprüche 1 bis 4, wobei der kegelstumpfförmige Körper ein biologisch abbaubares Material enthält.

6. Kapsel gemäß einem der vorhergehenden Ansprüche, wobei die Dichteinrichtung weich wird, wenn sie unter Druckkräften der Vorrichtung zusammengedrückt wird.

7. Kapsel gemäß einem der vorhergehenden Ansprüche, wobei die Dichteinrichtung durch die Flüssigkeit bei der Einspritztemperatur der Kapsel weich wird.

8. Kapselsystem mit einer Kapsel gemäß einem der Ansprüche 1 bis 7, das einer Wassereinspritzvorrichtung in einer Getränkeherstellungsvorrichtung zugeordnet ist.

## Revendications

1. Capsule (1) pour la préparation d'un extrait de café à partir de café contenu dans la capsule et d'eau chaude injectée sous pression dans la capsule par un dispositif d'injection d'eau, ladite capsule comprenant :
un corps (2) tronconique comprenant un rebord (3), une paroi latérale (4) et une paroi d'entrée (5) ; la paroi d'entrée comprenant une partie (6) plane ou convexe,
une paroi inférieure de distribution (7) scellée sur le rebord (3) du corps,
une quantité pré-dosée de café dans la capsule,
dans laquelle le rebord de la capsule comprend des moyens d'étanchéité (40) formant au moins une saillie ou lèvre intégrée s'étendant depuis le rebord ou un élément d'étanchéité ajouté comme du caoutchouc, du plastique souple, de la mousse ou des fibres,
dans laquelle le corps est une pièce tenant debout toute seule, moulée d'une seule pièce et formant au moins la paroi d'entrée, la paroi latérale et le rebord ;
**caractérisée en ce que** la partie (6) plane ou convexe présente une structure (8) en creux,
dans laquelle la structure en creux est agencée pour faciliter la pénétration de lames appartenant au dispositif d'injection à travers ladite structure et s'étend sur une trajectoire essentiellement circulaire de rayon R1 prédéterminé égal au rayon R2 de la trajectoire circulaire le long de laquelle s'étendent les lames (20, 21, 22) du dispositif d'injection,
dans laquelle la structure (8) forme une épaisseur localement réduite de la paroi d'entrée (5) en comparaison avec l'épaisseur de la paroi d'entrée à l'extérieur de ladite structure et,
dans laquelle la structure forme une partie (8) annulaire évidée continue de rayon R1 dans ladite partie (6) de la paroi d'entrée, et dans laquelle dans la partie évidée une pluralité de trous d'injection est prévue.

2. Capsule selon la revendication 1, dans laquelle la réduction locale d'épaisseur est obtenue par une entaille laser ou mécanique.

3. Capsule selon l'une quelconque des revendications précédentes, dans laquelle le corps tronconique est réalisé en matériau polymère.

4. Capsule selon la revendication 3, dans laquelle le corps tronconique comprend du polypropylène ou du polyéthylène.

5. Capsule selon l'une quelconque des revendications 1 à 4, dans laquelle le corps tronconique comprend un matériau biodégradable.

6. Capsule selon l'une quelconque des revendications précédentes, dans laquelle le moyen d'étanchéité s'assouplit lorsqu'il est compressé sous l'effet de forces de compression du dispositif.

7. Capsule selon l'une quelconque des revendications précédentes, dans laquelle le moyen d'étanchéité est assoupli par le liquide à la température d'injection de la capsule.

8. Système à capsule comprenant une capsule selon l'une quelconque des revendications 1 à 7 associé à un dispositif d'injection d'eau dans un dispositif de production de boisson.
